(19) Europäisches Patentamt
European Patent Office
Office européen des brevets

(11) **EP 2 645 128 A1**

(12) **EUROPEAN PATENT APPLICATION**

(43) Date of publication:
**02.10.2013 Bulletin 2013/40**

(51) Int Cl.:
***G01S 19/24*** *(2010.01)*          ***G01S 19/33*** *(2010.01)*

(21) Application number: **13159731.2**

(22) Date of filing: **18.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.03.2012   CN 201210090935**
**12.03.2013   US 201313796065**

(71) Applicant: **O2 Micro, Inc.**
**Santa Clara, CA 95054 (US)**

(72) Inventors:
• **Gao, Ke**
**Chengdu, Sichuan**
**PRC 610041 (CN)**

• **Liu, Mao**
**201203 Shanghai (CN)**
• **Zou, Jinghua**
**Chengdu, Sichuan**
**PRC 610041 (CN)**
• **Zhang, Weihua**
**Chengdu, Sichuan**
**PRC 610041 (CN)**

(74) Representative: **Lippert, Stachow & Partner**
**Patentanwälte**
**Postfach 30 02 08**
**51412 Bergisch Gladbach (DE)**

(54) **A navigation bit boundary determination apparatus and a method thereof**

(57)    A navigation bit boundary determination apparatus and a method thereof. In one example, the navigation bit boundary determination apparatus includes a satellite signal receiving module, a position receiving and clock calibration module, a detection module, a first calculation module, a second calculation module, and a determination module. The satellite signal receiving module is configured to receive a satellite signal from a satellite and record a local receiving time of the satellite signal.

The position receiving and clock calibration module is configured to receive a time signal and a position of the navigation bit boundary determination apparatus. The detection module is configured to detect if ephemeris information of the satellite is available. The first calculation module is configured to calculate a coordinate of the satellite. The second calculation module is configured to calculate a transmitting time for the satellite signal. The determination module is configured to determine a navigation bit boundary of the satellite signal.

FIG. 1

EP 2 645 128 A1

**Description**

RELATED APPLICATIONS

This application claims priority to Chinese Patent Application Number 201210090935.4, filed on March 31 2012 with State Intellectual Property Office of the P.R. China (SIPO), which is incorporated herein by reference in its entirety.

FIELD OF THE PRESENT TEACHING

The disclosure relates generally to the field of satellite navigation and positioning, and specifically, the disclosure relates to a navigation bit boundary determination apparatus for determining a navigation bit boundary of a satellite signal and a method for determining the navigation bit boundary of the satellite signal thereof.

BACKGROUND

With the development of electronic industry and computer technology, the satellite navigation and positioning technology is widely used and has important influence on people's daily life besides military applications. At present time, there are four sets of satellite navigation and positioning system in the world: BeiDou (Compass) navigation system, Global Positioning System (GPS), GLONASS system, and Galileo system which are developed by China, United States, Russia, and Europe, respectively. The GPS system is the earliest and most well-developed satellite navigation and positioning system currently.

The satellite navigation and positioning system usually includes three parts: the space part, the control part, and the user part. The space part contains multiple satellites in orbit. The control part mainly contains a monitoring system, which is composed of several ground stations, such as a master control station, an injection station, and the like. The user part is a receiver embedded with data processing software, and is used to receive satellite signals and to process the positioning and/or navigation based on the received satellite signals.

Generally, a receiver configured to receive the satellite signals for positioning and/or navigation purposes based on the received satellite signals can be booted from a hot boot mode, a warm boot mode, or a cold boot mode according to known prior information. The receiver is booted from the hot boot mode when the satellite ephemeris, which includes the approximate position of the receiver and the accurate satellite clock information, have been received, and it usually takes the receiver one to few seconds to boot in this hot boot mode. In the hot boot mode, the receiver does not perform positioning until one to a few seconds after the receiver is booted. The receiver is booted from the warm boot mode when the satellite almanac, which includes the approximate position of the receiver and the accurate satellite clock information, have been received, and it usually takes the receiver 30 seconds to boot in this warm boot mode. In the warm boot mode, the receiver does not perform positioning until about 30 seconds after the receiver is booted. The receiver is booted from the cold boot mode when the available satellite information (such as, the satellite ephemeris, the satellite almanac, the previous positions of the receiver and the satellite clock) is unavailable, and it usually takes the receiver 45 seconds to boot in this cold boot mode. For example, the receiver is booted from the cold boot mode when the satellite almanac information is lost due to initializing the receiver or restarting the receiver, e.g., after the battery of the receiver has run out of charge. The receiver can also be booted from the cold root mode when a relative long time has passed since the last positioning calculation or the moving distance of the receiver has exceeded a threshold. Thus, in the cold boot mode, the receiver does not perform positioning until about 45 seconds after the receiver is booted.

Traditionally, bit synchronization is performed to produce error free transmission in the satellite positioning and navigation system, and the bit synchronization is necessary for calculating the satellite ephemeris information. Thus, the step of bit synchronization is necessary when the receiver is in the warm boot mode or the cold boot mode and uses satellite signals, such as the Beidou Non- Geostationary Earth Orbit satellite signals, for positioning and navigation purpose. Because the receiver takes several seconds to perform the bit synchronization, the Beidou Non- Geostationary Earth Orbit satellite signals cannot be used for quickly calculating the positioning information and the navigation calculations information.

Furthermore, a bit flip of a navigation data in the Beidou Non- Geostationary Earth Orbit satellite signal occurs each 1 ms, therefore, a continuous integration time for capturing and tracking the Beidou Non- Geostationary Earth Orbit satellite signal is shortened to avoid the Signal Noise Ratio loss caused by the bit flip. As the continuous integration time is shortened, and then the capturing accuracy is reduced accordingly. Moreover, the navigation bit rate of the Beidou Non- Geostationary Earth Orbit satellite signal is 50bps (i.e., the cycle of the navigation bit data is 20ms), and the secondary code rate is 1 kbps. In a situation that the navigation bit boundary has not been determined, the Beidou Non- Geostationary Earth Orbit satellite signal should be captured and tracked in a capturing mode with a continuous integration time of 1 ms, which further reduces the capturing accuracy.

The step of bit synchronization can be also eliminated when a navigation bit boundary of the Beidou Non-Geostationary Earth Orbit satellite signal is determined. Detection of the navigation bit boundary of the Beidou satellite signal is critical for determining positioning. Specially, if the navigation bit boundary is found, the initial point for capturing and tracking the Beidou Non-Geostationary Earth Orbit satellite signal can be determined and a longer continuous integration time, i.e. the cycle of the navigation bit data, for capturing and tracking the Non-Geostationary Earth Orbit satellite signal can be also determined. Then, weaker satellite signals can be captured and tracked, and the performance of the receiver is also improved. Therefore, there is a need to determine the navigation bit boundary for satellite signals, such as the Beidou Non-Geostationary Earth Orbit satellite signals.

SUMMARY

In one embodiment, an apparatus for determining a navigation bit boundary is disclosed. The apparatus includes a satellite signal receiving module, a position receiving and clock calibration module, a detection module, a first calculation module, a second calculation module, and a determination module. The satellite signal receiving module is configured to receive a satellite signal from a satellite, determine and record a local receiving time of the satellite signal. The position receiving and clock calibration module is configured to receive a time signal and a position of the apparatus, and calibrate the local receiving time of the satellite signal to generate a calibrated receiving time. The detection module is configured to detect if ephemeris information of the satellite is available. The first calculation module is configured to calculate a coordinate of the satellite based on the ephemeris information. The second calculation module is configured to calculate a transmitting time for the satellite signal based on the position of the apparatus, the coordinate of the satellite and the calibrated receiving time of the satellite signal. The determination module is configured to determine a navigation bit boundary of the satellite signal based on the transmitting time for the satellite signal.

In another embodiment, a satellite receiver is disclosed. The satellite receiver is configured to determine a navigation bit boundary of a satellite signal based on a transmitting time for the satellite signal. A continuous integration time is determined based on the navigation bit boundary of the satellite signal for capturing and tracking the satellite signal.

In yet another embodiment, a method for determining a navigation bit boundary of a satellite signal is disclosed. The method includes the steps of receiving the satellite signal from a satellite and recording a local receiving time of the satellite signal; receiving a time signal and a position of a navigation bit boundary determination apparatus, and calibrating the local receiving time of the satellite signal to generate a calibrated receiving time; detecting if ephemeris information of the satellite is available; calculating a coordinate of the satellite based on the ephemeris information if the ephemeris information is available; calculating a transmitting time for the satellite signal based on the position of the navigation bit boundary determination apparatus, the coordinate of the satellite and the calibrated receiving time of the satellite signal; and determining the navigation bit boundary of the satellite signal based on the transmitting time for the satellite signal.

In yet another embodiment, a machine readable and non-transitory medium having information recorded thereon for determining a navigation bit boundary of a satellite signal, wherein the information, when read by the machine, causes the machine to perform a series of steps. The steps include receiving the satellite signal from a satellite and recording a local receiving time of the satellite signal; receiving a time signal and a position of a navigation bit boundary determination apparatus, and calibrating the local receiving time of the satellite signal to generate a calibrated receiving time; detecting if ephemeris information of the satellite is available; calculating a coordinate of the satellite based on the ephemeris information if the ephemeris information is available; calculating a transmitting time for the satellite signal based on the position of the navigation bit boundary determination apparatus, the coordinate of the satellite and the calibrated receiving time of the satellite signal; and determining the navigation bit boundary of the satellite signal based on the transmitting time for the satellite signal.

BRIEF DESCRIPTION OF THE DRAWINGS

Features of embodiments of the claimed subject matter will become apparent as the following detailed description proceeds, and upon reference to the drawings, wherein like numerals depict like parts. These exemplary embodiments are described in detail with reference to the drawings. These embodiments are non-limiting exemplary embodiments, in which like reference numerals represent similar structures throughout the several views of the drawings.

FIG. 1 is an exemplary block diagram illustrating an example of a navigation bit boundary determination apparatus for determining a navigation bit boundary of a satellite signal, in accordance with one embodiment of the present disclosure;

FIG. 2 illustrates an exemplary receiver communicating with several satellites according to one embodiment of the present disclosure;

FIG. 3 shows an exemplary detailed block diagram of a second calculation module shown in FIG. 1, in accordance with one embodiment of the present disclosure;

FIG. 4 is an exemplary block diagram illustrating an example of a GPS/Beidou dual mode receiver, in accordance with one embodiment of the present disclosure;

FIG. 5 is a flowchart illustrating a method for determining a navigation bit boundary of a satellite signal, in accordance with one embodiment of the present disclosure;

FIG. 6 is a detailed flowchart of step S560 shown in FIG. 5 or step S760 shown in FIG. 7, in accordance with one embodiment of the present disclosure; and

FIG. 7 is a flowchart illustrating another method for determining a navigation bit boundary of a satellite signal, in accordance with one embodiment of the present.

DETAILED DESCRIPTION

Reference will now be made in detail to the embodiments of the present teaching. While the present teaching will be described in conjunction with these embodiments, it will be understood that they are not intended to limit the present teaching to these embodiments. On the contrary, the present teaching is intended to cover alternatives, modifications and equivalents, which may be included within the spirit and scope of the present teaching as defined by the appended claims.

Furthermore, in the following detailed description of the present teaching, numerous specific details are set forth in order to provide a thorough understanding of the present teaching. However, it will be recognized by one of ordinary skill in the art that the present teaching may be practiced without these specific details. In other instances, well known methods, procedures, components, and circuits have not been described in detail as not to unnecessarily obscure aspects of the present teaching.

Beidou Non-Geostationary Earth Orbit satellite includes two kinds of Beidou satellites, i.e., Beidou Middle Earth Orbit (hereinafter "MEO") satellite and Beidou Inclined Geosynchronous Satellite Orbit (hereinafter "IGSO") satellite. A navigation bit boundary determination apparatus for determining a navigation bit boundary of a satellite signal, such as a Beidou Non-Geostationary Earth Orbit satellite signal, is disclosed. The navigation bit boundary determination apparatus can determine the navigation bit boundary of a satellite signal, such as the Beidou Non-Geostationary Earth Orbit satellite signal, based on positioning information, such as the GPS positioning information. By using the navigation bit boundary determination apparatus, a much longer continuous integration time for capturing and tracking the Beidou Non-Geostationary Earth Orbit satellite signal can be determined, and thus, the capturing accuracy is improved. The use of the navigation bit boundary determination apparatus eliminates the need for bit synchronization, and then the Beidou Non-Geostationary Earth Orbit satellite can be used for fast positioning and navigation responses, which improves the performance of the receiver. In one embodiment, a receiver equipped with the navigation bit boundary determination apparatus is also disclosed.

In one embodiment, the above-mentioned navigation bit boundary determination apparatus includes a satellite signal receiving module, a position receiving and clock calibration module, a detection module, a first calculation module, a second calculation module, and a determination module. The satellite signal receiving module is configured to receive the satellite signal, such as Beidou Non-Geostationary Earth Orbit satellite signal, determine and record a local receiving time of the satellite signal. In one embodiment, the satellite signal may satellite ephemeris information. For example, the Beidou Non-Geostationary Earth Orbit satellite signal may Beidou Non-Geostationary Earth Orbit satellite ephemeris information. The position receiving and clock calibration module is configured to receive a time signal from a receiver and a position of the navigation bit boundary determination apparatus calculated by the receiver based on positioning information, and calibrate the local receiving time of the satellite signal based on the received time signal. In one example, the position receiving and clock calibration module may receive a GPS time signal from a GPS receiver and a position of the navigation bit boundary determination apparatus calculated by the GPS receiver based on GPS positioning information, and calibrate the local receiving time of the Beidou Non-Geostationary Earth Orbit satellite signal based on the received GPS time signal. The detection module is configured to detect if the satellite ephemeris information in the satellite signal received by the satellite signal receiving module is available. In one example, the detection module may detect if the Beidou Non-Geostationary Earth Orbit satellite ephemeris information in the Beidou Non-Geostationary Earth Orbit satellite signal received by the Beidou satellite signal receiving module is available. The first calculation module is configured to calculate a coordinate of the satellite based on the satellite ephemeris information when the satellite ephemeris information is available. In one example, the first calculation module may calculate a coordinate of the Beidou Non-Geostationary Earth Orbit satellite based on the Beidou Non-Geostationary Earth Orbit satellite ephemeris information when the Beidou Non-Geostationary Earth Orbit satellite ephemeris information is available. The second calculation module is configured to calculate a transmitting time for the satellite signal based on the position of the navigation bit boundary determination apparatus, the coordinate of the satellite, and the calibrated receiving time of the satellite signal. In one example, the second calculation module may calculate a transmitting time for the Beidou Non-Geostationary Earth Orbit satellite signal based on the position of the navigation bit boundary determination apparatus, the coordinate of the Beidou Non-Geostationary Earth Orbit satellite, and the calibrated receiving time of the Beidou Non-Geostationary Earth Orbit satellite signal. The determination module is configured to determine the navigation bit boundary of the satellite signal based on the transmitting time for the satellite signal. In one example, the determination module may determine the navigation bit boundary of the Beidou Non-Geostationary Earth Orbit satellite signal based on the transmitting time for the Beidou Non-Geostationary Earth Orbit satellite signal.

The embodiments of the navigation bit boundary determination apparatus for determining the navigation bit boundary of the signal will be described in detail with reference to the drawings. In the following description, the satellite will be described as a Beidou Non-Geostationary Earth Orbit satellite and the satellite signal will be described as a Beidou Non-Geostationary Earth Orbit satellite signal. However, it is understood that such description is for illustrative purpose only and does not intend to limit the scope of the present teaching. It is understood that any satellite navigation and positioning system, such as but not limited to, Beidou (Compass) navigation system, GPS system, GLONASS system, and Galileo system, may be applied in the present teaching.

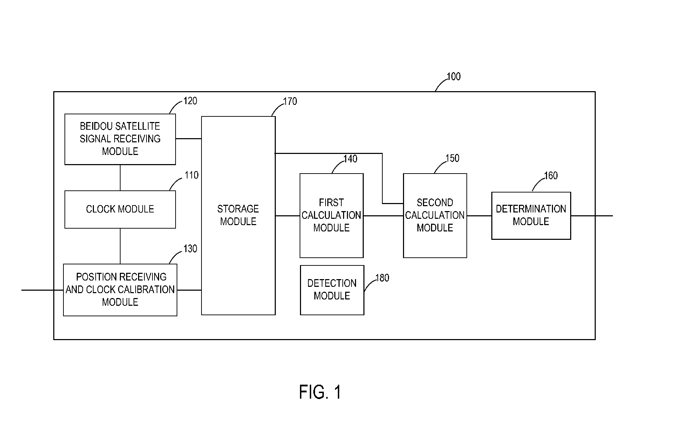

FIG. 1 illustrates an example of a navigation bit boundary determination apparatus 100 for determining a navigation bit boundary of a Beidou Non-Geostationary Earth Orbit satellite signal, in accordance with one embodiment of the present disclosure. As shown in FIG. 1, the navigation bit boundary determination apparatus 100 includes a clock module 110, a Beidou satellite signal receiving module 120, a position receiving and clock calibration module 130, a first calculation module 140, a second calculation module 150, a determination module 160, a storage module 170, and a detection module 180.

As shown in FIG. 1, the clock module 110 in the navigation bit boundary determination apparatus 100 is configured to provide the local time signal.

The Beidou satellite signal receiving module 120, which is configured to receive a Beidou Non-Geostationary Earth Orbit satellite signal, determines a local receiving time of the Beidou Non-Geostationary Earth Orbit satellite signal based on the local time signal provided by the clock module 110 and records the local receiving time of the Beidou Non-Geostationary Earth Orbit satellite signal. The information received by the Beidou satellite signal receiving module 120, for example, the Beidou Non-Geostationary Earth Orbit satellite signal and the recorded local receiving time as mentioned above, can be stored in the storage module 170 for being processed or called by the other modules.

The position receiving and clock calibration module 130, which is configured to receive a time signal from an external receiver (not shown in FIG. 1) and a position of the navigation bit boundary determination apparatus 100 calculated by the receiver based on the positioning information, calibrates the clock module 110 and the local receiving time of the Beidou Non-Geostationary Earth Orbit satellite signal by using the received time signal. In one example, the receiver is a GPS receiver and the time signal is a GPS time signal sent by the GPS receiver. It is understood that, the receiver and time signal are not limited to GPS, and may be compatible with any other satellite navigation and positioning system, such as but not limited to, Beidou (Compass) navigation system, GLONASS system, and Galileo system. For example, the local receiving time of the Beidou Non-Geostationary Earth Orbit satellite signal may be calibrated based on a clock bias $t_u$ obtained from GPS positioning information, and then a calibrated receiving time of the Beidou Non-Geostationary Earth Orbit satellite signal is obtained. The position of the navigation bit boundary determination apparatus 100 obtained based on the GPS positioning information is stored in the storage module 170.

In one embodiment, the position of the navigation bit boundary determination apparatus 100 may be calculated by the external GPS receiver (not shown in FIG. 1) and the GPS time signals can be obtained from the GPS positioning information. The position receiving and clock calibration module 130 receives the calculated information as mentioned above from the external GPS receiver. The calculated information received by the position receiving and clock calibration module 130 is used to determine the navigation bit boundary of the Beidou Non-Geostationary Earth Orbit satellite signal.

In addition, the local receiving time of the Beidou Non-Geostationary Earth Orbit satellite signal, as well as the clock module 110, may be calibrated based on the clock bias $t_u$ of the receiver.

The storage module 170 stores the information received by the Beidou satellite signal receiving module 120 and the position receiving and clock calibration module 130 as mentioned above. The storage module 170 may further store other information produced or used by each module in the navigation bit boundary determination apparatus 100. This kind of information includes, but is not limited to, calculation parameters, temporary data, etc.

The detection module 180 is configured to determine if the Beidou Non-Geostationary Earth Orbit satellite ephemeris information is available.

The first calculation module 140 is configured to calculate a coordinate of the Beidou Non-Geostationary Earth Orbit satellite based on the Beidou Non-Geostationary Earth Orbit satellite ephemeris information when the Beidou Non-Geostationary Earth Orbit satellite ephemeris information is available as detected by the detection module 180.

The second calculation module 150 is configured to calculate a transmitting time for the Beidou Non-Geostationary Earth Orbit satellite signal based on the position of the navigation bit boundary determination apparatus, the coordinate of the Beidou Non-Geostationary Earth Orbit satellite, and the calibrated receiving time of the Beidou Non-Geostationary Earth Orbit satellite signal.

The determination module 160 is configured to receive the transmitting time for the Beidou Non-Geostationary Earth Orbit satellite signal from the second calculation module 150, and calculate the navigation bit boundary of the Beidou Non-Geostationary Earth Orbit satellite signal according to the received transmitting time.

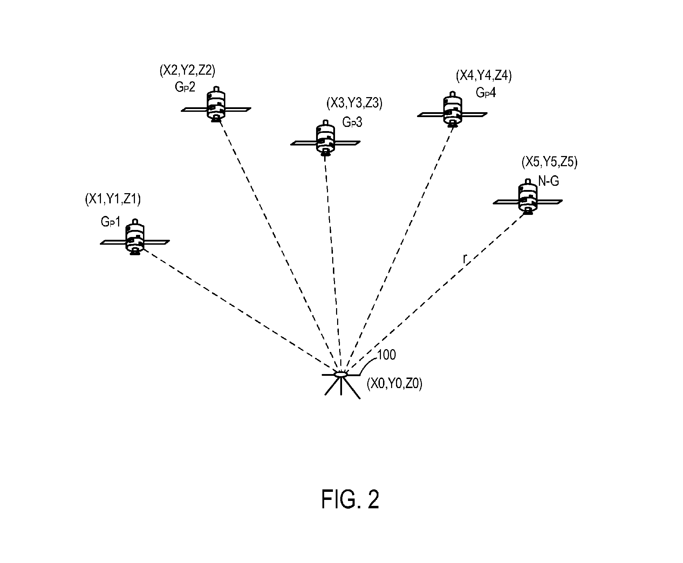

FIG. 2 illustrates an exemplary application of the navigation bit boundary determination apparatus 100 for determining a navigation bit boundary of a Beidou Non-Geostationary Earth Orbit satellite signal, in accordance with one embodiment of the present disclosure. As shown in FIG. 2, $G_P1~G_P4$ indicate four GPS satellites that may be searched and used by an external GPS receiver and N-G represent a Beidou Non-Geostationary Earth Orbit satellite. The coordinates of $G_P1~G_P4$ are (X1, Y1, Z1) ~(X4, Y4, Z4), respectively, are all known. The position coordinate of the external GPS receiver is (X0, Y0, Z0) as shown in FIG. 2. According to the positions of the four GPS satellites and transmission times for the satellite signals, four equations may be established to calculate the position coordinate of the external GPS receiver, i.e. (X0, Y0, Z0). As the detailed equations for calculating the coordinate of the external GPS receiver are well known by one of ordinary skill in the art, it will be not described herein for brevity and clarity. In a situation, where the external GPS receiver is located near the navigation bit boundary determination apparatus 100, the position of the external GPS receiver may be regarded the same as the position of the navigation bit boundary determination apparatus 100. Therefore, the position coordinate of the navigation bit boundary determination apparatus 100 may be regarded as (X0, Y0, Z0). Those skilled in the art will recognize that the operating  principle of GPS positioning and the detailed calculation process are well known, and it will be not described herein for brevity and clarity.

As described in FIG. 2, the position coordinate of the navigation bit boundary determination apparatus 100, i.e., the coordinate (X0, Y0, Z0), may be received by the position receiving and clock calibration module 130 from the external GPS receiver. Furthermore, as the coordinate of the Beidou Non-Geostationary Earth Orbit satellite N-G, i.e., (X5, Y5, Z5), is required for a further calculation, the first calculation module 140 shown in FIG. 1 is used to determine the coordinate of the Beidou Non-Geostationary Earth Orbit satellite N-G, i.e., (X5, Y5, Z5).

As shown in FIG. 1, in one embodiment, the first calculation module 140 is configured to calculate the coordinate of the Beidou Non-Geostationary Earth Orbit satellite based on the Beidou Non-Geostationary Earth Orbit satellite ephemeris information when the Beidou Non-Geostationary Earth Orbit satellite ephemeris information is available. The Beidou Non-Geostationary Earth Orbit satellite ephemeris information is available when the satellite ephemeris information has been obtained, for example, stored in the storage module 170. For example, the satellite ephemeris information may be obtained by a pervious demodulation, and the demodulated satellite ephemeris information is stored in the storage module 170, then the satellite ephemeris information is available.

In another embodiment, the first calculation module 140 is further configured to calculate the coordinate of the Beidou Non-Geostationary Earth Orbit satellite based on the Beidou Non-Geostationary Earth Orbit satellite ephemeris information when the Beidou Non-Geostationary Earth Orbit satellite ephemeris information is available and valid.

More specifically, the Beidou Non-Geostationary Earth Orbit satellite ephemeris information is available and valid when the satellite ephemeris information has been obtained and is within a validity period. In one example, the validity period of the satellite ephemeris information is about two hours. In other words, in the situation that validity period of the Beidou Non-Geostationary Earth Orbit satellite ephemeris information is two hours, the Beidou Non-Geostationary Earth Orbit satellite ephemeris information is available and valid when the satellite ephemeris information is obtained from the previous positioning information within two hours and is stored in the navigation bit boundary determination apparatus 100 without any loss. The calculation according to the obtained satellite ephemeris information mentioned above can improve the calculating accuracy and make the result of the calculation much more accurate.

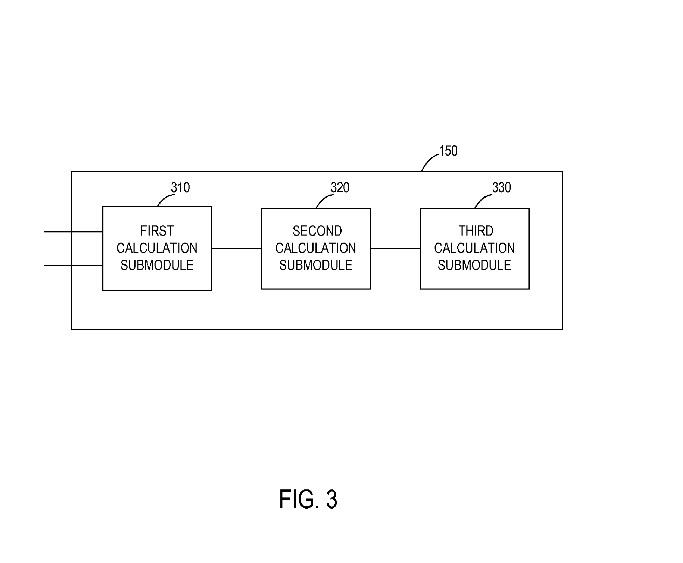

The coordinate of the Beidou Non-Geostationary Earth Orbit satellite N-G, i.e., the value of (X5, Y5, Z5), is obtained by using the first calculation module 140. Then, the second calculation module 150 may determine a transmitting time for the Beidou Non-Geostationary Earth Orbit satellite signal based on the position coordinate of the navigation bit boundary determination apparatus 100, the coordinate of the Beidou Non-Geostationary Earth Orbit satellite N-G, and the calibrated receiving time of the Beidou Non-Geostationary Earth Orbit satellite signal. In one example, the second calculation module 150 may be configured according to the block diagram shown in FIG. 3, which will be described in detailed below.

FIG. 3 shows an exemplary detailed block diagram of the second calculation module 150 illustrated in FIG. 1. As shown in FIG. 3, the second calculation module 150 includes a first calculation sub-module 310, a second calculation sub-module 320 and a third calculation sub-module 330.

The first calculation sub-module 310 is configured to calculate a distance r between the navigation bit boundary determination apparatus 100 and the Beidou Non-Geostationary Earth Orbit satellite N-G according to the position coordinate of the navigation bit boundary determination apparatus 100 and the coordinate of the Beidou Non-Geostationary Earth Orbit satellite N-G. The coordinates (X0, Y0, Z0) and (X5, Y5, Z5) indicate the position coordinate of the navigation bit boundary determination apparatus 100 and the coordinate of the Beidou Non-Geostationary Earth Orbit satellite N-G, respectively. The distance r is calculated according equation (1-1):

$$r = \sqrt{(x_5 - x_0)^2 + (y_5 - y_0)^2 + (z_5 - z_0)^2} \qquad (1\text{-}1)$$

After the distance r between the navigation bit boundary determination apparatus 100 and the Beidou Non-Geostationary Earth Orbit satellite N-G is calculated, the second calculation sub-module 320 calculates a transmission time t for the Beidou Non-Geostationary Earth Orbit satellite signal transmitted from the Beidou Non-Geostationary Earth Orbit satellite N-G to the navigation bit boundary determination apparatus 100. The transmission time t is calculated according to equation (1-2):

$$t = \frac{r}{c} = \frac{\sqrt{(x_5 - x_0)^2 + (y_5 - y_0)^2 + (z_5 - z_0)^2}}{c} \qquad (1-2)$$

wherein, c represents the speed of light.

Accordingly, the transmission time t for the Beidou Non- Geostationary Earth Orbit satellite signal transmitted from the Beidou Non- Geostationary Earth Orbit satellite N- G to the navigation bit boundary determination apparatus 100 is obtained by using the second calculation sub- module 320 in accordance with the distance r calculated by the first calculation sub- module 310. The third calculation sub- module 330 is configured to calculate the transmitting time $t_t$ for the Beidou Non- Geostationary Earth Orbit satellite signal based on the calibrated receiving time of the Beidou Non- Geostationary Earth Orbit satellite signal and the transmission time t, which is caculated by the second calculation sub- module 320. For example, if the calibrated receiving time of the Beidou Non- Geostationary Earth Orbit satellite signal is represented by $t_r$, and is calibrated by the position receiving and clock calibration module 130, then the value of the transmitting time $t_t$ is equal to $(t_r - t)$ .

After the transmitting time $t_t$ is calcualted by the third calculation sub-module 330, the determination module 160 may determine the navigation bit boundary of the Beidou Non-Geostationary Earth Orbit satellite signal based on the transmitting time $t_t$ for the Beidou Non-Geostationary Earth Orbit satellite signal. Moreover, an example of determining the navigation bit boundary of the Beidou Non-Geostationary Earth Orbit satellite signal based on the transmitting time $t_t$ for the Beidou Non-Geostationary Earth Orbit satellite signal will be described in detail below.

For example, an initial transmitting time for the Beidou Non-Geostationary Earth Orbit satellite signal, i.e., a time when the Beidou Non-Geostationary Earth Orbit satellite transmits the satellite signal, is to. The initial transmitting time $t_0$ for the Beidou Non-Geostationary Earth Orbit satellite signal is a GPS time which is converted from a Real-Time Clock (hereinafter "RTC"). The method for calculating the present GPS time based on the RTC clock is well known by one of the ordinary skill in the art. For example, using 21/22th, August, 1999 as a start time, an equation is eastablished as below to calculation present GPS time:

$$t_{GPS} = [dow*24 + (hour + zonenum)*60 + min]*60 + sec + leapsec; \qquad (1-3)$$

wherein, dow represent a day of week; hour, min, and sec represent hour, minute, and second information of the RTC time, respectively; zonenum reppresents time zone of the RTC time; leapsec represents a difference between the present Coordinated Universal Time (UTC) and the GPS time. An equation is established in accordance with the calibrated receiving time $t_r$ of the Beidou Non-Geostationary Earth Orbit satellite signal and the transmitting time $t_t$ for the Beidou Non-Geostationary Earth Orbit satellite signal. The equation is listed as below:

$$x = (t_t - t_0) \bmod 20ms; \qquad (1-4)$$

wherein, x is the remainder of a difference of $t_t$ (ms) and $t_0$ (ms) devided by 20ms. According to the value of x, the navigation bit boundary of the Beidou Non-Geostationary Earth Orbit satellite signal is calculated. Then the continuous integration time for capturing and tracking the Non-Geostationary Earth Orbit satellite signal may be further determined. For example, if the value of x is equal to zero, which means that the Beidou Non-Geostationary Earth Orbit satellite signal is in the navigation bit boundary at time $t_t$, the Beidou Non-Geostationary Earth Orbit satellite signal may be captured and tracked from time $t_t$ with the continuous integration time of 20ms; otherwise, the Beidou Non-Geostationary Earth Orbit satellite signal is in the navigation bit boundary at time $(t_t+20-x)$, and the Beidou Non-Geostationary Earth Orbit satellite signal may be captured and tracked from time $(t_t+20-x)$ with the continuous integration time of 20ms. Therefore, the navigation bit boundary of Beidou Non-Geostationary Earth Orbit satellite signal may be determined based on the transmitting time $t_t$ for the Beidou Non-Geostationary Earth Orbit satellite signal.

It is noted that in equation (1-4), $t_t$ and $t_0$ are calibrated by the same system time. For example, if $t_t$ is calibrated by the GPS time, then $t_0$ is also calibrated by the GPS time, and x may be calculated according to equation (1-4).

If the navigation bit boundary of the Beidou Non-Geostationary Earth Orbit satellite signal is determined by using the navigation bit boundary determination apparatus 100 disclosed in present teaching, the Beidou Non-Geostationary Earth Orbit satellite signal may be captured and tracked in a capture mode with a much longer continuous integration time without performing bit synchronization. Therefore, the Beidou Non-Geostationary Earth Orbit satellite signal may be used for quick positioning and navigation calculations. In one embodiment, the continuous integration time may be any real number in the range of [1 ms, 20ms]. In one example, the capture mode with the continuous integration time of 20ms may be used for capturing and tracking the Beidou Non-Geostationary Earth Orbit satellite signal.

Comparing with the conventional capture mode with the continuous integration time of 1 ms, a much longer continuous integration time may be adopted by the navigation bit boundary determination apparatus 100 for capturing and tracking the Beidou Non-Geostationary Earth Orbit satellite signal, satellites with weaker signals may also be used for positioning and navigation purposes, and the capturing and tracking accuracy of these weaker signals may be improved.

Furthermore, as described above, the navigation bit boundary determination apparatus 100 disclosed in the present disclosure may determine the navigation bit boundary of the Beidou Non- Geostationary Earth Orbit satellite signal based on GPS positioning information received from the external GPS receiver. The disclosed present disclosure may determine the navigation bit boundary of the Beidou Non- Geostationary Earth Orbit satellite signal without performing bit synchronization.

The above-mentioned navigation bit boundary determination apparatus 100 may be used for determining the navigation bit boundary of the Beidou Non-Geostationary Earth Orbit satellite signal, and also for positioning and/or navigating purposes. For example, the Beidou Non-Geostationary Earth Orbit satellite signal may be used for quick positioning and navigation calculations when the receiver is in the warm boot mode or the cold boot mode without performing bit synchronizationThus, several seconds may be saved.

In another embodiment, the Beidou Non-Geostationary Earth Orbit satellite N-G may be either a Beidou MEO satellite or a Beidou IGSO satellite. It is understood that the navigation bit boundary determination apparatus may interface with more than one Beidou Non-Geostationary Earth Orbit satellite, such as, one or multiple Beidou MEO satellites, and/or one or multiple Beidou IGSO satellites. In this situation, the method for processing each satellite signal may be performed by the modules in the navigation bit boundary determination apparatus 100, and then the navigation bit boundary of each satellite signal may be determined.

It is understood that the disclosed embodiment of determining the navigation bit boundary of Beidou Non-Geostationary Earth Orbit satellite signal based on the transmitting time for the Beidou Non-Geostationary Earth Orbit satellite signal is an exemplary, and not meant to be limited. It will be recognized by one of ordinary skill in the art that other embodiments for determining the navigation bit boundary of Beidou Non-Geostationary Earth Orbit satellite signal based on the transmitting time for the Beidou Non-Geostationary Earth Orbit satellite signal maybe also included in the present disclosure, and these embodiments will be not described herein for brevity and clarity.

In one embodiment, a Beidou satellite receiver is disclosed. The Beidou satellite receiver may include a navigation bit boundary determination apparatus 100 as described above.

The Beidou satellite receiver includes a navigation bit boundary determination apparatus, and the navigation bit boundary determination apparatus have similar components and functions as the navigation bit boundary determination apparatus 100 shown in FIG. 1, and it will not be described herein for brevity and clarity.

More specifically, the navigation bit boundary determination apparatus in the Beidou satellite receiver is used to determine the navigation bit boundary of the Beidou Non-Geostationary Earth Orbit satellite signal. According to the navigation bit boundary of the Beidou Non-Geostationary Earth Orbit satellite signal, a continuous integration time is determined, and then the Beidou Non-Geostationary Earth Orbit satellite signal from the Beidou Non-Geostationary Earth Orbit satellite may be captured and tracked with the determined continuous integration time. That is, the Beidou Non-Geostationary Earth Orbit satellite signal may be captured and tracked with the continuous integration time which is determined in accordance with the above-mentioned navigation bit boundary of the Beidou Non-Geostationary Earth Orbit satellite signal. Because the Beidou Non-Geostationary Earth Orbit satellite signal may be captured and tracked using the continuous integration time, the Beidou Non-Geostationary Earth Orbit satellite signal may then be used without necessity of performing a bit synchronization.

As described above, the navigation bit boundary determination apparatus in the Beidou satellite receiver may be used to determine the navigation bit boundary of the Beidou Non-Geostationary Earth Orbit satellite signal without performing bit synchronization. The Beidou Non-Geostationary Earth Orbit satellite signal may be used for quick positioning and navigation calculations when the receiver is in the warm boot mode or the cold boot mode without performing bit synchronization. Thus, several seconds may be saved.

In addition, as the navigation bit boundary of the Beidou Non-Geostationary Earth Orbit satellite signal has been determined, a much longer continuous integration time can be adopted by the navigation bit boundary determination apparatus for capturing and tracking the Beidou Non-Geostationary Earth Orbit satellite signal. Thus, much weaker satellite signals maybe captured and tracked. Therefore, the capturing and tracking accuracy may be further improved, and the performance of the receiver is improved accordingly.

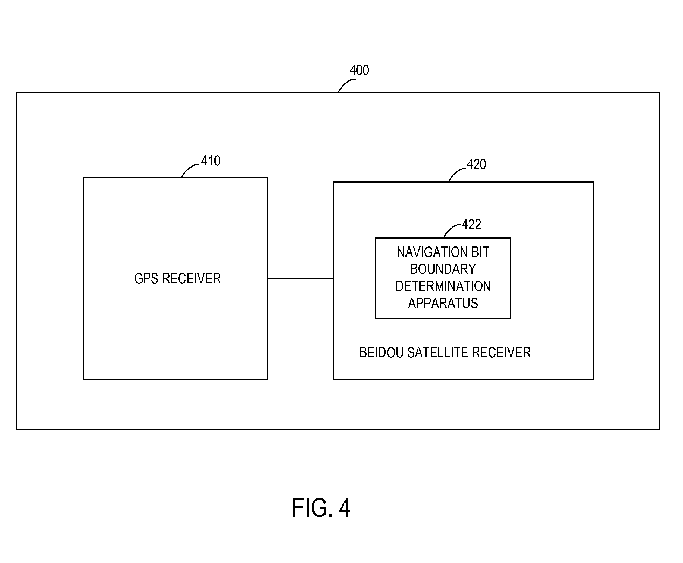

In one embodiment, a GPS/Beidou dual mode receiver is provided. The GPS/Beidou dual mode receiver includes a GPS receiver and a Beidou satellite receiver as described above. FIG. 4 illustrates an example of the GPS/ Beidou dual mode receiver 400, in accordance with one embodiment of the present disclosure.

As shown in FIG. 4, a GPS/Beidou dual mode receiver 400 includes a GPS receiver 410 and a Beidou satellite receiver 420. The Beidou satellite receiver 420 is equipped with a navigation bit boundary determination apparatus 422. The Beidou satellite receiver 420 and the navigation bit boundary determination apparatus 422 have similar components and functions as the Beidou satellite receiver and the navigation bit boundary determination apparatus described above, respectively, and it will not be described herein for brevity and clarity.

The GPS receiver 410 may be any one of the commercial GPS receivers, and may obtain GPS time signals and a position of the GPS/Beidou dual mode receiver 400, which is obtained according to GPS positioning information. The position of the GPS/Beidou dual mode receiver 400 may be regarded as the position of the navigation bit boundary determination apparatus 422. The position of the GPS/Beidou dual mode receiver 400 and the GPS time signals as metioned aboved may be provided to the navigation bit boundary determination apparatus 422 in the Beidou satellite receiver 420. For example, in order to determine a three-dimensional space coordinate of the GPS/Beidou dual mode receiver 400, at least four GPS satellites may be caputured during the GPS positioning process.

The disclosed GPS/Beidou dual mode receiver 400 includes the navigation bit boundary determination apparatus 422. Therefore, the disclosed GPS/Beidou dual mode receiver 400 may operate in a single-mode in a way like a conventional GPS/Beidou dual mode receiver. For example, the disclosed GPS/Beidou dual mode receiver 400 may either position and/or navigate by using GPS satellites signals or the Beidou satellite signals. The disclosed GPS/Beidou dual mode receiver 400 may further operate in a dual-mode with novel features. For example, the disclosed GPS/Beidou dual mode receiver 400 may determine the navigation bit boundary of the Beidou Non-Geostationary Earth Orbit satellite signal based on the information obtained from GPS positioning information. Such information includes the position of the GPS/Beidou dual mode receiver 400 obtained from the GPS positioning information and the GPS time signals. Thus, a much longer continuous integration time may be used for capturing and tracking the Beidou Non-Geostationary Earth Orbit satellite signal, and thus, satellites with weaker signals can be captured and tracked. Therefore, the capturing and tracking accuracy can be further improved. In addition, the Beidou GEO satellite signal may be used for quick positioning and navigation calculations without performing bit synchronization, thereby, saving several seconds. The performance of the receiver is improved accorindly.

In one embodiment, a mobile device may inlude the above-mentioned Beidou satellite receiver or GPS/Beidou dual mode receiver. For example, the mobile device maybe any one of the navigator, mobile phone, notebook, iPad, PDA (personal digital assistant), multimedia player device, e.g, MP3/MP4 player and E-book, and other devices that can include the GPS receiver 410.

In one embodiment, the above-mentioned mobile device equipped with the Beidou satellite receiver or GPS/ Beidou dual mode receiver includes the navigation bit boundary determination apparatus 100 shown in FIG. 1. The Beidou Non-Geostationary Earth Orbit satellite signal may be used for quick positioning and navigation calculations when the receiver is in the warm boot mode or the cold boot mode without performing bit synchronization. Moreover, a much longer continuous integration time may be adopted by the navigation bit boundary determination apparatus for capturing and tracking the Beidou Non-Geostationary Earth Orbit satellite signal, and thus, a few much weaker satellite signals can be captured and tracked. Therefore, the capturing and tracking accuracy can be further improved.

A method for determining the navigation bit boundary of the Beidou Non-Geostationary Earth Orbit satellite signal is provided. An example of the method will be described in combination with FIG. 1, FIG. 5 and FIG. 6.

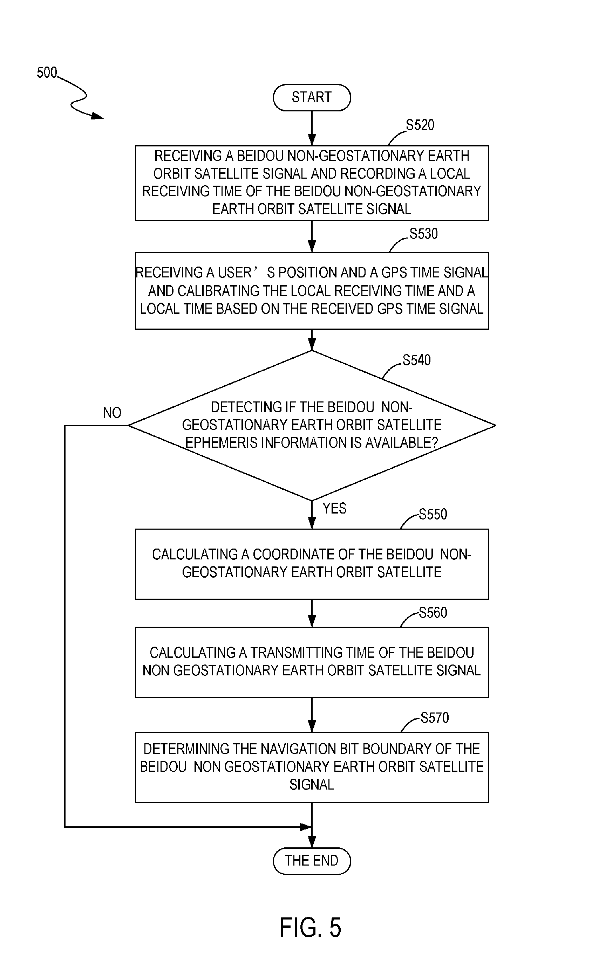

FIG. 5 illustrates a method for determining a navigation bit boundary of the Beidou Non-Geostationary Earth Orbit satellite signal, in accordance with one embodiment of the present disclosure. Step S520, a Beidou satellite signal receiving module 120 in a navigation bit boundary determination apparatus 100 receives a Beidou Non-Geostationary Earth Orbit satellite signal, determines and records a local receiving time of the Beidou Non-Geostationary Earth Orbit satellite signal. Step S530, a position receiving and clock calibration module 130 in the navigation bit boundary determination apparatus 100 receives the position of navigation bit boundary determination apparatus calculated by an external GPS receiver based on the GPS positioning information and a GPS time signal obtained from the GPS positioning information, and calibrates the local receiving time and a local time based on the received GPS time signal. The position of the navigation bit boundary determination apparatus 100 and a user's position are used interchangeably in this specification. Step S540, a detection module 180 in the navigation bit boundary determination apparatus 100 detects if the Beidou Non-Geostationary Earth Orbit satellite ephemeris information is available. The Beidou Non-Geostationary Earth Orbit satellite ephemeris information is included in the Beidou Non-Geostationary Earth Orbit satellite signal received by the Beidou satellite signal receiving module 120. If the Beidou Non-Geostationary Earth Orbit satellite ephemeris information is available, then the navigation bit boundary determination apparatus 100 calculates a coordinate of the Beidou Non-Geostationary Earth Orbit satellite as performed at Step S550; otherwise, no action is taken.

Step S550, after the Beidou Non-Geostationary Earth Orbit satellite ephemeris information is detectd to be available, a first calculation module 140 in the navigation bit boundary determination apparatus 100 calculates the coordinate of the Beidou Non-Geostationary Earth Orbit satellite based on the available satellite ephemeris information. Step S560, a second calculation module 150 in the navigation bit boundary determination apparatus 100 calculates a transmitting time $t_t$ for the Beidou Non-Geostationary Earth Orbit satellite signal based on the position of the navigation bit boundary determination apparatus 100, the coordinate of the Beidou Non-Geostationary Earth Orbit satellite, and the calibrated receiving time $t_r$ of the Beidou GEO satellite signal.

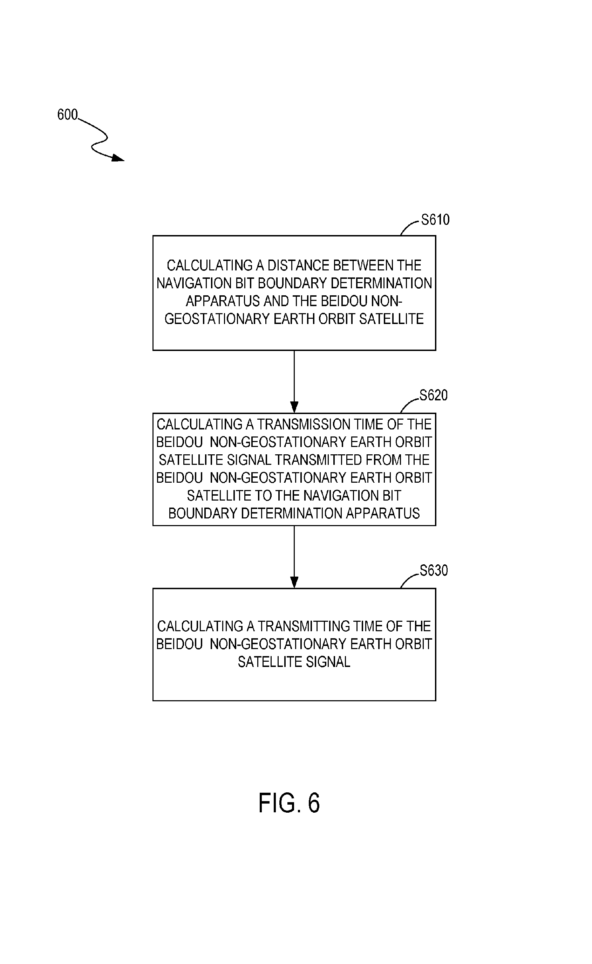

The calculation of the transmission time for the Beidou Non-Geostationary Earth Orbit satellite signal may be broken down in steps S610~S630 shown in FIG. 6.

As shown in FIG. 6, step S61 0, a first calculation sub-module 310 in the second calculation module 150 calculates a distance r between the navigation bit boundary determination apparatus 100 and the Beidou Non-Geostationary Earth Orbit satellite based on the position of the navigation bit boundary determination apparatus 100, which is received at step S530 and the coordinate of the Beidou Non-Geostationary Earth Orbit satellite obtained at step S550. Step S620, a second calculation sub-module 320 in the second calculation module 150 calculates a transmission time t for the Beidou Non-Geostationary Earth Orbit satellite signal transmitted from the Beidou Non-Geostationary Earth Orbit satellite to the navigation bit boundary determination apparatus 100 based on the distance r obtained at step S610. Step S630, a third calculation sub-module 330 in the second calculation module 150 calculates the transmitting time $t_t$ for the Beidou Non-Geostationary Earth Orbit satellite signal based on the transmission time t and the calibrated receiving time $t_r$ of the Beidou Non-Geostationary Earth Orbit satellite signal.

For example, the detailed method for calculating the transmitting time $t_t$ as shown at steps S61 0, S620 and S630 may be implemented by the first calculation sub-module 310, the second calculation sub-module 320 and the third calculation sub-module 330 in combination with FIG. 3, respectively, and it will not be described herein for brevity and clarity.

Thus, the transmitting time $t_t$ for the Beidou Non- Geostationary Earth Orbit satellite signal is obtained by performing the step S560, i.e., the detailed steps S610~S630. Then, step S570, a determination module 160 in the navigation bit boundary determination apparatus 100 determines the navigation bit boundary of the Beidou Non- Geostationary Earth Orbit satellite signal based on the transmitting time $t_t$ for the Beidou Non- Geostationary Earth Orbit satellite signal as calculated at step S560. The detailed method for determining the navigation bit boundary of the Beidou Non- Geostationary Earth Orbit satellite signal based on the transmitting time $t_t$ for the Beidou Non- Geostationary Earth Orbit satellite signal as performed at step S570 has been described previously and will not be repeated here. The determined navigation bit boundary of the Beidou Non- Geostationary Earth Orbit satellite signal is used to determine a continuous integration time for capturing and tracking the Beidou Non- Geostationary Earth Orbit satellite signal. The continuous integration time may be any duration between 1ms and 20ms.

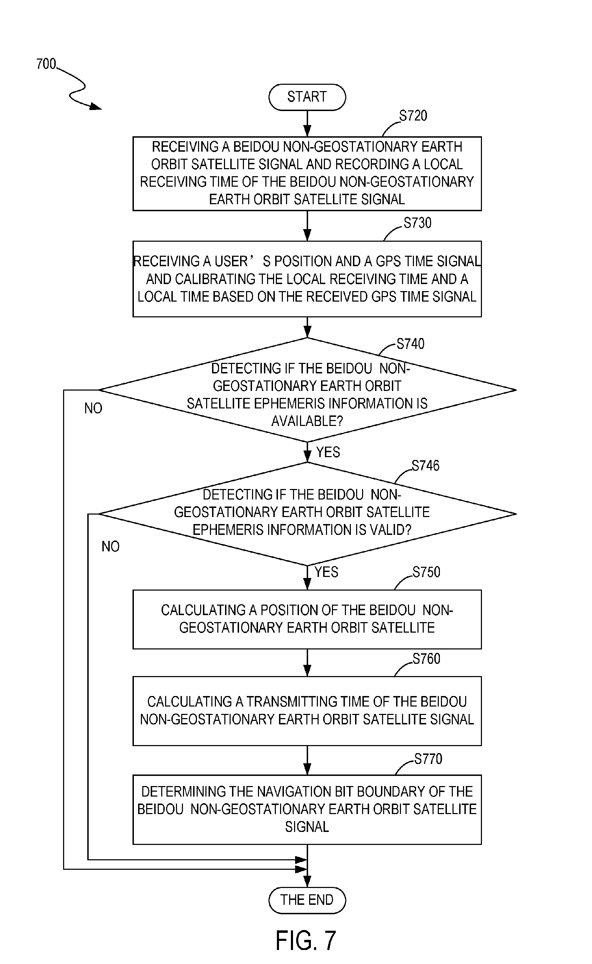

FIG. 7 is a flowchart illustrating another method for determining a navigation bit boundary of a Beidou Non-Geostationary Earth Orbit satellite signal, in accordance with one embodiment of the present. In the embodiment as shown in FIG. 7, the Beidou Non-Geostationary Earth Orbit satellite ephemeris information for calculating the coordinate of the Beidou Non-Geostationary Earth Orbit satellite is not only available, but is also valid. That is, the satellite ephemeris information is within a validity period.

As shown in FIG. 7, Step S746 is added in a flowchart 700. Moreover, the steps of S720-S740 in the flowchart 700 perform similar functions as the steps of S520-S540 in the flowchart 500; the steps of S750-S770 in the flowchart 700 perform similar functions as the steps of S550-S570 in the flowchart 500, and it will not be described herein for brevity and clarity.

The difference between the flowchart 700 and the flowchart 500 is that the step S746 is added between the step 740 and the step S750. In other words, after detecting if the Beidou Non-Geostationary Earth Orbit satellite ephemeris information is available at step S740, the detection module 180 further detects if the Beidou Non-Geostationary Earth Orbit satellite ephemeris information is valid at step S746. For example, the detection module 180 may detect if the satellite ephemeris information is within a validity period, e.g., two hours. If the the satellite ephemeris information is detected to be within the validity period, the satellite ephemeris information is valid.

If the Beidou Non-Geostationary Earth Orbit satellite ephemeris infomation is valid, the navigation bit boundary determination apparatus 100 calculates a coordinate of the Beidou Non-Geostationary Earth Orbit satellite at Step S750; otherwise, no action is taken.

The steps S750-S770 in the flowchart 700 are similar as the steps of S550-S570 in the flowchart 500, and it will not be described herein for brevity and clarity.

As described above, the navigation bit boundary of the Beidou Non-Geostationary Earth Orbit satellite signal may be determined by using the GPS positioning information received from an external GPS receiver, in accordance with one embodiment of the present disclosure. In other words, the navigation bit boundary of the Beidou Non-Geostationary Earth Orbit satellite signal may be determined without performing bit synchronization. Thus, in a satellite positioning and/or navigation technology, the above-mentioned navigation bit boundary determination apparatus may be used for determining the navigation bit boundary of the Beidou Non-Geostationary Earth Orbit satellite signal, and for positioning or navigating purposes without performing bit synchronization. Therefore, the Beidou Non-Geostationary Earth Orbit satellite signal may be used for quick positioning and navigation calculations when the receiver is in the warm boot mode or the cold boot mode, thereby saving several seconds. In addition, when the above-mentioned navigation bit boundary determination apparatus is used to determine the navigation bit boundary of the Beidou Non-Geostationary Earth Orbit satellite signal, a much longer continous integration time may be adopted by the navigation bit boundary determination apparatus for capturing and tracking the Beidou Non-Geostationary Earth Orbit satellite signal, and thus, a few weaker satellite signals may be captured and tracked. Therefore, the capturing and tracking accuracy may be further improved.

In one embodiment, a satellite navigation and positioning method is provided, in accordance with one embodiment of the present disclosure. The satellite navigation and positioning method includes the step of processing the navigation and positioning based on the Beidou satellite, for example, the Beidou Geostationary Earth Orbit satellite and/or Beidou Non-Geostationary Earth Orbit satellite. In such a step, the navigation and positioning processing is peformed by a conventional Beidou satellite receiver. This step is also known as a Beidou single mode navigation and positioning processing step. The satellite navigation and positioning method further includes a step of processing the navigation and positioning by using the above-mentioned method for detemining the navigation bit boundary. This step is also known as an auxiliary navigation and positioning processing step.

The above mentioned auxiliary navigation and positioning processing further includes the steps of determining the navigation bit boundary of the Beidou Non-Geostationary Earth Orbit satellite signal, determining a continuous integration time for capturing and tracking the Beidou Non-Geostationary Earth Orbit satellite signal based on the navigation bit boundary of the Beidou Non-Geostationary Earth Orbit satellite signal in order to position an object by the Beidou Non-Geostationary Earth Orbit satellite without performing bit synchronization. Thus, the positioning time maybe reduced, a much longer continous integration time may be adopted for capturing and tracking the Beidou Non-Geostationary Earth Orbit satellite signal, and satellites with weaker signals may be captured and tracked. Therefore, the capturing and tracking accuracy can be further improved.

In another embodiment, the satellite navigation and positioning method futher include a GPS single mode navigation and positioning processing step besides the Beidou single mode navigation and positioning processing step and the auxiliary navigation and positioning processing step. That is, the navigation and positioning processing is performed by a conventional GPS receiver. In this situation, the auxiliary navigation and positioning processing step may be implemented by using the information obtained in the GPS single mode navigation and positioning processing step. Moreover, these three processing steps of the navigation and positioning processing may be switched from one processing step to another processing step according to the user's requirements or actual situation.

Accordingly, the navigation bit boundary of the Beidou Non- Geostationary Earth Orbit satellite signal may be determined by performing the above- mentioned satellite navigation positioning methods based on the GPS positioning information. The Beidou Non- Geostationary Earth Orbit satellite signal may be used for quick positioning and navigation calculations when the receiver is in the warm boot mode or the cold boot mode without performing bit synchronization.

Aspects of the method for determining a navigation bit boundary of a satellite signal, as outlined above, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors or the like, or associated modules thereof, such as various semiconductor memories, tape drives, disk drives and the like, which may provide storage at any time for the software programming.

All or portions of the software may at times be communicated through a network such as the Internet or various other telecommunication networks. Such communications, for example, may enable loading of the software from one computer or processor into another. Thus, another type of media that may bear the software elements includes optical, electrical, and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

Hence, a machine readable medium may take many forms, including but not limited to, a tangible storage medium, a carrier wave medium or physical transmission medium. Non- volatile storage media include, for example, optical or magnetic disks, such as any of the storage devices in any computer (s) or the like, which may be used to implement the system or any of its components as shown in the drawings. Volatile storage media include dynamic memory, such as a main memory of such a computer platform. Tangible transmission media include coaxial cables; copper wire and fiber optics, including the wires that form a bus within a computer system. Carrier- wave transmission media can take the form of electric or electromagnetic signals, or acoustic or light waves such as those generated during radio frequency (RF) and infrared (IR) data communications. Common forms of computer- readable media therefore include for example: a floppy disk, a flexible disk, hard disk, magnetic tape, any other magnetic medium, a CD- ROM, DVD or DVD- ROM, any other optical medium, punch cards paper tape, any other physical storage medium with patterns of holes, a RAM, a PROM and EPROM, a FLASH- EPROM, any other memory chip or cartridge, a carrier wave transporting data or instructions, cables or links transporting such a carrier wave, or any other medium from which a computer can read programming code and/or data. Many of these forms of computer readable media may be involved in carrying one or more sequences of one or more instructions to a processor for execution.

While the foregoing description and drawings represent embodiments of the present disclosure, it will be understood that various additions, modifications, and substitutions may be made therein without departing from the spirit and scope of the  principles of the present disclosure as defined in the accompanying claims. One skilled in the art will appreciate that the present disclosure may be used with many modifications of form, structure, arrangement, proportions, materials, elements, and components and otherwise, used in the practice of the disclosure, which are particularly adapted to specific environments and operative requirements without departing from the principles of the present disclosure. The presently disclosed embodiments are therefore to be considered in all respects as illustrative and not restrictive, the scope of the present disclosure being indicated by the appended claims and their legal equivalents, and not limited to the foregoing description.

## Claims

1. An apparatus for determining a navigation bit boundary of a satellite signal, comprising:

   a satellite signal receiving module configured to receive the satellite signal from a satellite, determine and record a local receiving time of the satellite signal;
   a position receiving and clock calibration module configured to receive a time signal and a position of the apparatus, and calibrate the local receiving time of the satellite signal according to the received time signal to obtain a calibrated local receiving time;
   a detection module configured to detect if ephemeris information of the satellite is available;
   a first calculation module configured to calculate a coordinate of the satellite based on the ephemeris information if the ephemeris information is available;
   a second calculation module configured to calculate a transmitting time for the satellite signal based on the position of the apparatus, the coordinate of the satellite and the calibrated receiving time of the satellite signal; and
   a determination module configured to determine the navigation bit boundary of the satellite signal based on the transmitting time for the satellite signal.

2. The apparatus of claim 1, wherein the satellite includes a Beidou (Compass) Non-Geostationary Earth Orbit satellite.

3. The apparatus of claim 1 or 2, wherein the time signal includes a global positioning system (GPS) time signal.

4. The apparatus of one of claims 1 to 3, wherein the first calculation module calculates the coordinate of the satellite based on the ephemeris information when the ephemeris information is available and valid.

5. The apparatus of claim 4, wherein the ephemeris information is valid if the satellite ephemeris information is within a validity period.

6. The apparatus of one of claims 1 to 5, wherein the navigation bit boundary of the satellite signal is used to determine a continuous integration time for capturing and tracking the satellite signal.

7. The apparatus of claim 6, wherein the continuous integration time is between 1 ms and 20ms.

8. The apparatus of one of claims 1 to 7, wherein the second calculation module comprising:

   a first calculation sub-module configured to calculate a distance between the apparatus and the satellite based on the position of the apparatus and the coordinate of the satellite;
   a second calculation sub-module configured to calculate a transmission time for the satellite signal transmitted from the satellite to the apparatus based on the distance between the apparatus and the satellite; and
   a third calculation sub-module configured to calculate the transmitting time for the satellite signal based on the calibrated receiving time and the transmission time for the satellite signal.

9. The apparatus of one of claims 1 to 8, further comprising:

a clock module configured to provide a local time,
wherein the satellite signal receiving module determines the local receiving time of the satellite signal according to the local time.

10. The apparatus of one of claims 1 to 9, further comprising:

a storage module configured to store information,
wherein the storage module stores the local receiving time determined by the satellite signal receiving module, and the position of the apparatus received by the position receiving and clock calibration module.

11. The apparatus of claim 2, wherein the Beidou Non-Geostationary Earth Orbit satellite include at least one of a Beidou Middle Earth Orbit (MEO) satellite and a Beidou Inclined Geosynchronous Satellite Orbit (IGSO) satellite.

12. A satellite receiver comprising an apparatus for determining a navigation bit boundary of a satellite signal according to one of claims 1 to 11.

13. The satellite receiver of claim 12, wherein the satellite signal includes a Beidou Non-Geostationary Earth Orbit satellite signal.

14. A method for determining a navigation bit boundary of a satellite signal, comprising the steps of:

receiving the satellite signal from a satellite and recording a local receiving time of the satellite signal by a navigation bit boundary determination apparatus;
receiving a time signal and a position of the navigation bit boundary determination apparatus, and calibrating the local receiving time of the satellite signal to generate a calibrated receiving time;
detecting if ephemeris information of the satellite is available;
calculating a coordinate of the satellite based on the satellite ephemeris information if the ephemeris information is available;
calculating a transmitting time for the satellite signal based on the position of the navigation bit boundary determination apparatus, the coordinate of the satellite, and the calibrated receiving time of the satellite signal; and
determining the navigation bit boundary of the satellite signal based on the transmitting time for the satellite signal.

15. The method of claim 14, wherein the satellite includes a Beidou (Compass) Non-Geostationary Earth Orbit satellite.

16. The method of claim 14 or 15, wherein the time signal includes a GPS time signal.

17. The method of one of claims 14 to 16, further comprising:

checking if the ephemeris information is within a validity period to detect validity of the ephemeris information.

18. The method of one of claims 14 to 17, wherein the navigation bit boundary of the Orbit satellite signal is used to determine a continuous integration time for capturing and tracking the satellite signal.

19. The method of claim 18, wherein the continuous integration time is between 1 ms and 20ms.

20. The method of one of claims 14 to 19, further comprising:

calculating a distance between the navigation bit boundary determination apparatus and the satellite based on the position of the navigation bit boundary determination apparatus and the coordinate of the satellite;
calculating a transmission time for the satellite signal transmitted from the satellite to the navigation bit boundary determination apparatus based on the distance between the navigation bit boundary determination apparatus and the satellite; and
calculating the transmitting time for the satellite signal based on the calibrated receiving time and the transmission time for the satellite signal.

21. The method of one of claims 14 to 20, further comprising the step of:

determining the local receiving time of the satellite signal based on a local time provided by a clock module in the navigation bit boundary determination apparatus.

22. The method of one of claims 14 to 21, further comprising the step of:

storing the position of the navigation bit boundary determination apparatus and the local receiving time into a storage module in the navigation bit boundary determination apparatus.

23. A machine-readable tangible and non-transitory medium having information recorded thereon for determining a navigation bit boundary of a satellite signal, wherein the information, when read by the machine, causes the machine to perform the following:

receiving the satellite signal from a satellite and recording a local receiving time of the satellite signal by a navigation bit boundary determination apparatus;
receiving a time signal and a position of the navigation bit boundary determination apparatus, and calibrating the local receiving time of the satellite signal to generate a calibrated receiving time;
detecting if ephemeris information of the satellite is available;
calculating a coordinate of the satellite based on the satellite ephemeris information if the ephemeris information is available;
calculating a transmitting time for the satellite signal based on the position of the navigation bit boundary determination apparatus, the coordinate of the satellite, and the calibrated receiving time of the satellite signal; and
determining the navigation bit boundary of the satellite signal based on the transmitting time for the satellite signal.

FIG. 1

(X2,Y2,Z2)
G$_P$2

(X3,Y3,Z3)
G$_P$3

(X4,Y4,Z4)
G$_P$4

(X5,Y5,Z5)
N-G

(X1,Y1,Z1)
G$_P$1

r

100

(X0,Y0,Z0)

FIG. 2

FIG. 3

400

410

GPS RECEIVER

420

422

NAVIGATION BIT
BOUNDARY
DETERMINATION
APPARATUS

BEIDOU SATELLITE RECEIVER

FIG. 4

500

START

S520

RECEIVING A BEIDOU NON-GEOSTATIONARY EARTH ORBIT SATELLITE SIGNAL AND RECORDING A LOCAL RECEIVING TIME OF THE BEIDOU NON-GEOSTATIONARY EARTH ORBIT SATELLITE SIGNAL

S530

RECEIVING A USER'S POSITION AND A GPS TIME SIGNAL AND CALIBRATING THE LOCAL RECEIVING TIME AND A LOCAL TIME BASED ON THE RECEIVED GPS TIME SIGNAL

S540

NO

DETECTING IF THE BEIDOU NON-GEOSTATIONARY EARTH ORBIT SATELLITE EPHEMERIS INFORMATION IS AVAILABLE?

YES

S550

CALCULATING A COORDINATE OF THE BEIDOU NON-GEOSTATIONARY EARTH ORBIT SATELLITE

S560

CALCULATING A TRANSMITTING TIME OF THE BEIDOU NON GEOSTATIONARY EARTH ORBIT SATELLITE SIGNAL

S570

DETERMINING THE NAVIGATION BIT BOUNDARY OF THE BEIDOU NON GEOSTATIONARY EARTH ORBIT SATELLITE SIGNAL

THE END

FIG. 5

600

S610

CALCULATING A DISTANCE BETWEEN THE NAVIGATION BIT BOUNDARY DETERMINATION APPARATUS AND THE BEIDOU NON-GEOSTATIONARY EARTH ORBIT SATELLITE

S620

CALCULATING A TRANSMISSION TIME OF THE BEIDOU NON-GEOSTATIONARY EARTH ORBIT SATELLITE SIGNAL TRANSMITTED FROM THE BEIDOU NON-GEOSTATIONARY EARTH ORBIT SATELLITE TO THE NAVIGATION BIT BOUNDARY DETERMINATION APPARATUS

S630

CALCULATING A TRANSMITTING TIME OF THE BEIDOU NON-GEOSTATIONARY EARTH ORBIT SATELLITE SIGNAL

FIG. 6

700

START

S720

RECEIVING A BEIDOU NON-GEOSTATIONARY EARTH ORBIT SATELLITE SIGNAL AND RECORDING A LOCAL RECEIVING TIME OF THE BEIDOU NON-GEOSTATIONARY EARTH ORBIT SATELLITE SIGNAL

S730

RECEIVING A USER'S POSITION AND A GPS TIME SIGNAL AND CALIBRATING THE LOCAL RECEIVING TIME AND A LOCAL TIME BASED ON THE RECEIVED GPS TIME SIGNAL

S740

DETECTING IF THE BEIDOU NON-GEOSTATIONARY EARTH ORBIT SATELLITE EPHEMERIS INFORMATION IS AVAILABLE?

NO

YES

S746

DETECTING IF THE BEIDOU NON-GEOSTATIONARY EARTH ORBIT SATELLITE EPHEMERIS INFORMATION IS VALID?

NO

YES

S750

CALCULATING A POSITION OF THE BEIDOU NON-GEOSTATIONARY EARTH ORBIT SATELLITE

S760

CALCULATING A TRANSMITTING TIME OF THE BEIDOU NON-GEOSTATIONARY EARTH ORBIT SATELLITE SIGNAL

S770

DETERMINING THE NAVIGATION BIT BOUNDARY OF THE BEIDOU NON-GEOSTATIONARY EARTH ORBIT SATELLITE SIGNAL

THE END

FIG. 7

EP 2 645 128 A1

EUROPEAN SEARCH REPORT

Application Number

EP 13 15 9731

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2009/160704 A1 (ZHAO LIANG [US] ET AL) 25 June 2009 (2009-06-25)<br>* figures 3 ,7 *<br>* paragraph [0027] *<br>* paragraph [0030] *<br>* paragraph [0035] *<br>* paragraph [0038] *<br>----- | 1-23 | INV.<br>G01S19/24<br>G01S19/33 |
| Y | EP 1 160 582 A2 (NOKIA MOBILE PHONES LTD [FI] NOKIA CORP [FI]) 5 December 2001 (2001-12-05)<br>* paragraph [0012] *<br>* paragraph [0035] - paragraph [0036] *<br>----- | 1-23 | |
| A | US 6 075 987 A (CAMP WILLIAM O JR [US] ET AL) 13 June 2000 (2000-06-13)<br>* column 8, line 37 - line 59 *<br>----- | 1-23 | |
| A | WO 2009/130305 A1 (NORDNAV TECHNOLOGIES AB [SE]; LEWIS TY [SE]; LINDSTROM FREDRIK [SE]) 29 October 2009 (2009-10-29)<br>* figure 1 *<br>* page 3, line 4 - line 29 *<br>* page 8, line 7 - page 13, line 21 *<br>----- | 1-23 | TECHNICAL FIELDS SEARCHED (IPC)<br><br>G01S |

The present search report has been drawn up for all claims

| Place of search | Date of completion of the search | Examiner |
|---|---|---|
| Munich | 25 July 2013 | Hekmat, Taymoor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 13 15 9731

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2013

| Patent document cited in search report | | Publication date | Patent family member(s) | | Publication date |
|---|---|---|---|---|---|
| US 2009160704 | A1 | 25-06-2009 | CA | 2710465 A1 | 09-07-2009 |
| | | | CN | 101932949 A | 29-12-2010 |
| | | | EP | 2232289 A1 | 29-09-2010 |
| | | | EP | 2584377 A1 | 24-04-2013 |
| | | | JP | 2011512513 A | 21-04-2011 |
| | | | KR | 20100094588 A | 26-08-2010 |
| | | | KR | 20120049952 A | 17-05-2012 |
| | | | KR | 20120128169 A | 26-11-2012 |
| | | | RU | 2010130164 A | 27-01-2012 |
| | | | TW | 200935082 A | 16-08-2009 |
| | | | US | 2009160704 A1 | 25-06-2009 |
| | | | US | 2012032846 A1 | 09-02-2012 |
| | | | WO | 2009086016 A1 | 09-07-2009 |
| EP 1160582 | A2 | 05-12-2001 | EP | 1160582 A2 | 05-12-2001 |
| | | | FI | 20001300 A | 01-12-2001 |
| | | | US | 2002003492 A1 | 10-01-2002 |
| US 6075987 | A | 13-06-2000 | AR | 014664 A1 | 28-03-2001 |
| | | | AU | 2491099 A | 15-09-1999 |
| | | | BR | 9908287 A | 31-10-2000 |
| | | | CN | 1292094 A | 18-04-2001 |
| | | | CO | 4830483 A1 | 30-08-1999 |
| | | | EE | 200000494 A | 15-02-2002 |
| | | | EP | 1057041 A1 | 06-12-2000 |
| | | | US | 6075987 A | 13-06-2000 |
| | | | WO | 9944073 A1 | 02-09-1999 |
| WO 2009130305 | A1 | 29-10-2009 | GB | 2459334 A | 28-10-2009 |
| | | | WO | 2009130305 A1 | 29-10-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210090935